# EUROPEAN PATENT APPLICATION

(11) **EP 2 116 936 A1**
(43) Date of publication of application: **11.11.2009**
(21) Application number: 08704160.4
(22) Date of filing: 30.01.2008
(51) Int. Cl.: G06F 13/00, H04N 5/765, H04N 7/173

(54) **FILE RECEPTION TERMINAL**

(30) Priority: 30.01.2007 JP 2007020197
(71) Applicant: Sharp Kabushiki Kaisha, Osaka-shi Osaka 545-8522 (JP)
(72) Inventor: ITOH, Motohiro, Osaka-shi, Osaka 545-8522 (JP)
(74) Representative: Müller - Hoffmann & Partner
(86) International application number: PCT/JP2008/051393
(87) International publication number: WO 2008/093725

(57) **Abstract**

In order to receive an image file by a recorder, a user conventionally should explicitly switch the system state to a state for data reception such as an operation for starting communication software and an operation for temporarily switching to a wait screen which can perform a file reception process. In order to solve the aforementioned problem, it is possible to provide an electronic device which identifies the attribute of a received file and a process being executed and performs a process in accordance with them. For this, it is possible to automatically perform an operation based on not only the file type but also the program being executed by the electronic device. Thus, it is possible to execute a desired process without requiring a complicated operation by the user.

## Description

### Field of the Invention

The present invention relates to a technology of a file reception terminal, which receives a file transmitted from a file transmission terminal, and operates depending on the received file type.

### Background Art

In recent years, in an electronic apparatus, specifically, in a personal computer, a television apparatus, and a DVD recorder, various applications are installed, thereby enhancing their multi-functionality. For example, some DVD recorders can receive image files from an external source, record them, output them to a display device connected to the recorder, display them, and edit the displayed image.

However, this multi-functionality of the electronic apparatus could possibly increase complicated operations by a user. For example, in cases where an image file is received by the recorder, the user is required to explicitly switch to a system status where the data reception is possible by activation of communication software and by switching to a standby screen where the file reception is possible. When receiving the file, the file is stored automatically, or is stored in a storage specified by the user. The user is required to search and select the received file from a plurality of files including files already stored, and to operate to display and edit the file in order to use the received data.

In Japanese Unexamined Patent Application Publication No. 2005-223518, in order to simplify the storage of the received image data, an image storage apparatus for storing the image data file to different folders depending on type of the image data file is disclosed.
Patent Reference 1: Japanese Unexamined Patent Application Publication No. 2005-223518

### Disclosure of the Invention

### Problems that the Invention Tries to Solve

However, in the Japanese Unexamined Patent Application Publication No. 2005-223518, storing according to the type of the received file is limited to one specific processing. Therefore, the user is required to do the activation of the program for reproducing the stored file in order to reproduce the stored file and the activation of the program for editing the stored file in order to edit the stored file, thereby still imposing burdens on the user.

### Means for Solving the Problems

In order to solve the above deficiencies, in a first aspect of the present invention, an electronic apparatus comprises a communication unit, an acquisition unit, which acquires a file in cases where the communication unit has received the file, an acquisition unit for file attribute information, which acquires file attribute information from the acquired file, an acquisition unit for identification information of processing being executed, which acquires identification information of a processing currently being executed, and a determination unit, which determines a processing to be executed by a program executing the processing identified by the identification information of processing being executed based on the identification information of processing being executed and on the acquired file attribute information. In a second aspect of the present invention, in the electronic apparatus according to the first aspect, the determination unit comprises GUIP determination means, which determines a processing to be executed only by a program executing GUI processing among the programs identified by the identification information of processing being executed.

In a third aspect of the present invention, an electronic apparatus comprises a communication unit, an acquisition unit, which acquires a file in cases where the communication unit has received the file, an acquisition unit for file attribute information, which acquires file attribute information from the acquired file, an execution unit, which executes a file attribute-dependent program including a step of causing a computer to execute an operation to determine a processing to be executed according to the file attribute information, and an output unit for file attribute information, which outputs the acquired file attribute information to the execution unit, such that the file attribute-dependent program can carry out said operation, in cases where the execution unit executes the file attribute-dependent program. In a fourth aspect of the present invention, in the electronic apparatus according to the third aspect, the output unit for file attribute information comprises GUIP output means, which carries out said output only to the file attribute-dependent program including GUI being executed by the execution unit.

In a fifth aspect of the present invention, a control method for electronic apparatus comprises the steps of acquiring a file, which has been received, acquiring file attribute information from the acquired file, acquiring identification information of processing being executed, which is for identifying a processing currently being executed, and determining a processing to be executed by a program executing the processing identified by the identification information of processing being executed based on the identification information of processing being executed and on the acquired file attribute information. In a sixth aspect of the present invention, a control method for electronic apparatus comprises the steps of acquiring a file, which has been received, acquiring file attribute information from the acquired file, determining whether a file attribute-dependent program including a step of causing a computer to execute an operation to determine a processing to be executed according to the file attribute information is executed, and outputting the acquired file attribute information, such that the file attribute-dependent program can carry out said operation, in cases where the file attribute-dependent program is executed.

### Effects of the Invention

According to the electronic apparatus of the present invention having the above-mentioned configuration, it is possible to carry out processing dependent on the file attribute of the received file and the processing currently being executed. Therefore, the electronic apparatus can automatically carry out an operation according not only to file type but also to a program currently being executed, so that it is possible to carry out processing desired by a user without complex operations by the user. Accordingly, it is possible to improve user-friendliness.

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof. Note that the first embodiment will mainly describe Claims 1, 2, and 5. Moreover, the second embodiment will mainly describe Claims 3, 4, and 6.

### <<First embodiment>>

### <Concept of First Embodiment>

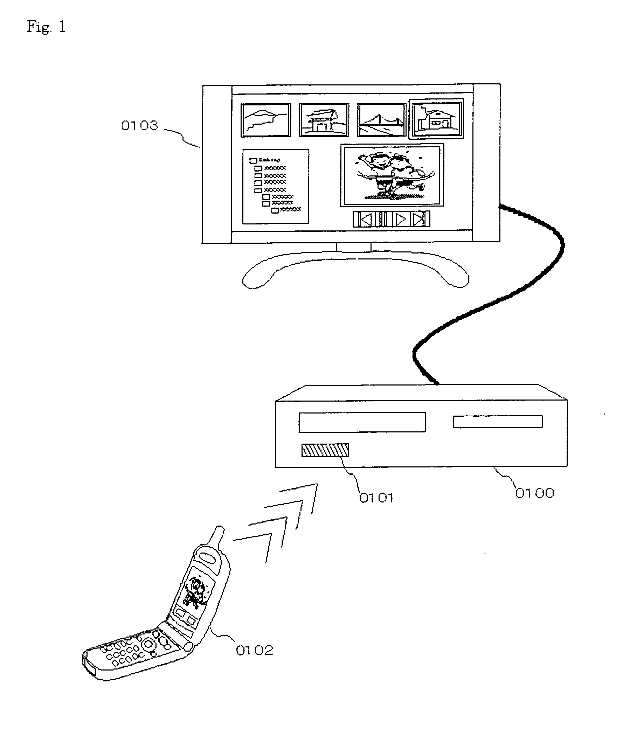

A first embodiment of the present invention will be described. Fig. 1 shows a concept of an electronic apparatus (0100) of the first embodiment utilizing a recorder apparatus. In the electronic apparatus of the first embodiment, a file attribute information including information as to whether the received file is an image file or a movie file is acquired in cases where receiving the file from an external terminal (0102) such as a mobile phone or a digital camera through a communication unit (0101). Additionally, the recorder apparatus, which has received the file, acquires identification information of processing being executed for identifying a processing being executed by a running program. For example, in Fig. 1, a program for reproducing image file is running, and details of the processing being executed is displayed on a screen of a television apparatus (0103) connected to the recorder apparatus. Here at, the recorder apparatus acquires the identification information of processing being executed for identifying the processing being executed. A processing to be subsequently executed by the running program is determined based on the file attribute information and the identification information of processing being executed. For example, in cases where receiving the image file during the reproducing program is running, the received file is acquired as the image file being reproduced by the reproducing program, thereby immediately being reproduced. Moreover, in cases where the program, which is to execute the received file, runs in the background, it is possible to call the program to carry out display in the foreground, thereby displaying the received file.

### <Specifying of Components of First Embodiment>

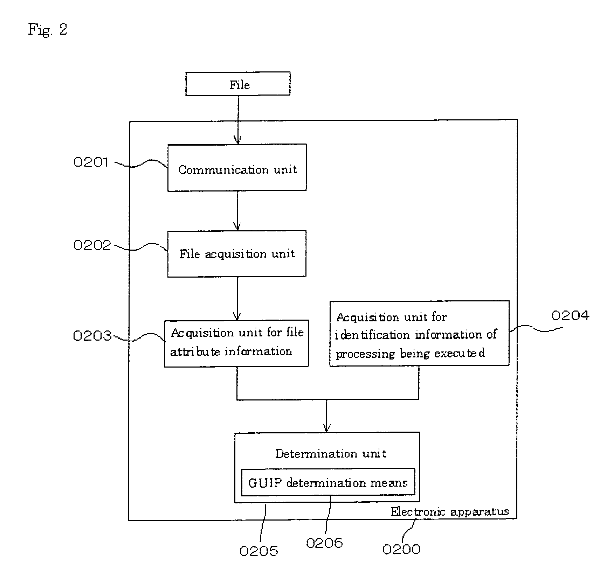

Fig. 2 is a functional block diagram of the electronic apparatus of the first embodiment. An 'electronic apparatus' (0200) of the first embodiment basically comprises a 'communication unit' (0201), a 'file acquisition unit' (0202), an 'acquisition unit for file attribute information' (0203), an 'acquisition unit for identification information of processing being executed' (0204), and a 'determination unit' (0205). Moreover, the determination unit may comprise 'GUIP determination means' (0206).

### <Description of Components of First Embodiment>

The 'electronic apparatus' (0200), which can utilize an electronic file, at least comprises a communication unit, a file acquisition unit, an acquisition unit for file attribute information, an acquisition unit for identification information of processing being executed, and a determination unit. Specifically, examples of the electronic apparatus include a mobile phone, a PDA (Personal Digital Assistant), a laptop computer, a desktop computer, a DVD recorder, a HDD recorder, and a television apparatus, and the electronic apparatus is an apparatus at least having a communication function and a calculation function.

The 'communication unit' (0201) is configured to carry out transmission/reception of a file via wireless or wired communication. Examples of the wireless communication include wireless LAN, infrared communication, Bluetooth. Examples of the wired communication include USB, i.Link (registered trademark), Ethernet (registered trademark), and phone line. Moreover, any communication function may be used. The communication unit comprises an interface enabling these communication functions. The 'file' is mainly an image file, a movie file, a text file, or a music file, and may be any file.

The 'file acquisition unit' (0202) is configured to acquire a file in cases where the communication unit has received the file. In cases where the communication unit receives the file, the file acquisition unit detects the reception, and acquires the file received at the communication unit.

The 'acquisition unit for file attribute information' (0203) is configured to acquire file attribute information from the acquired file. The 'file attribute information' is information indicating file attribute. The information indicating file attribute is, for example, information indicating file type such as an image file, a movie file, a text file, or a music file. Moreover, in the case of the image file, the information indicates file format such as jpg. file, gif. file, png, file, or bmp file. The above information can be acquired from file extensions, header information, or property information. The acquisition unit for file attribute information acquires the file attribute information from the file acquired by the file acquisition unit.

The 'acquisition unit for identification information of processing being executed' (0204) is configured to acquire identification information of a processing currently being executed. The 'identification information of processing being executed' is information for identifying a processing being executed. The processing being executed corresponds to a processing in a program, which has been developed on work area in a memory, and are running or on stand by. The terms 'identifying a processing' means identification as to which program is the running program, or identification of the processing being executed by the program. Hereinafter, the identification of the processing being executed by the program is described, and the same is applied to the identification of the program.

For example, description of Fig. 1, where the 'recorder apparatus' (0101) is connected to the 'television apparatus' (0102), and display on a screen of the television apparatus based on output signal transmitted through an output terminal of the recorder apparatus is carried out, is provided. Here, the recorder apparatus corresponds to the electronic apparatus. In the recorder apparatus, the image-reproducing program is running, and GUI (Graphical User Interface) indicating a state where a specific image file is reproduced or a state where the image file can be reproduced is displayed on a screen based on the output signal. Here, the reproduction executed by the image-reproducing program corresponds to the processing being executed. Additionally, aside from the image reproducing program, in cases where the image editing program having a editing function is editing a specific image or is on standby for an edition of an image file which has been selected, the edit processing corresponds to the processing being executed. Additionally, many processings executed by programs such as reception of image, reproduction and edition of movie or music and menu selection may correspond the processing being executed.

Additionally, the processing being executed is not necessarily a processing displayed through GUI on a screen, and may be a processing executed by a program not displayed through GUI on a screen. For example, in cases where a plurality of programs are running simultaneously, a non-active program being executed in the background, not an active program, may corresponds to the processing being executed. Moreover, even if no program executing the specific program is running in the electronic apparatus, at least a basic program such as an operating system (OS) for operating the electronic apparatus is running in cases where its power is ON, and the processing executed by such program corresponds to the processing being executed.

The identification information of processing being executed is information for identifying the above processings, and information for indicating the running program and its operating state. Note that in cases where a plurality of programs are running simultaneously, a plurality of identification information of processing being executed may be acquired, any of the identification information of processing being executed may be acquired selectively, or identification information of processing being executed of high-priority program may be acquired in accordance with a predetermined priority order of programs. For example, in cases where the OS program and another program are running simultaneously, the identification information of processing being executed of the program other than the OS program may be acquired, and in cases where only the OS program is running, the identification information of processing being executed of the OS program may be acquired.

The 'determination unit' (0205) is configured to determine a processing to be executed by a program executing the processing identified by the identification information of processing being executed based on the identification information of processing being executed and on the acquired file attribute information.

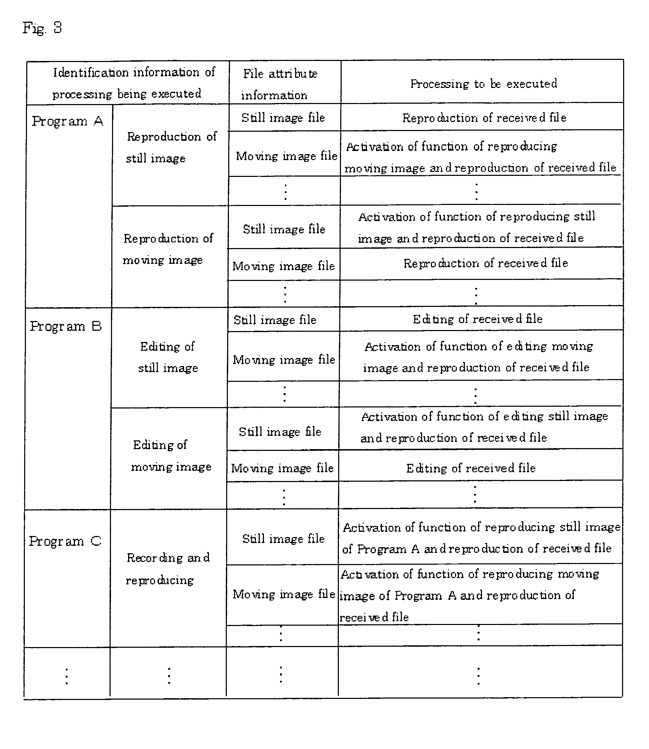

Concrete description of this will be provided with reference to Fig. 3. The determination unit stores a determination table for processing being executed as shown in Fig. 3, and by means of this table, a processing to be subsequently executed by the running program is determined based on the identification information of processing being executed and on the acquired file attribute information.

For example, in cases where program A having a function of reproducing a still image and a function of reproducing a moving image has been activated and is running, the acquisition unit for identification information of processing being executed acquires identification information of the reproduction of a still image of the program A as the processing being executed. Additionally, in cases where the file acquisition unit acquires a still image file X in jpg. format, the acquisition unit for file attribute information acquires the file attribute information of the still image file as the file information. Here, the determination unit determines that the reproduction processing of the received file X is the processing to be executed by the program A with reference to the determination table for processing being executed.

In cases where the program A is executing the reproduction of a moving image, the acquisition unit for identification information of processing being executed acquires identification information of the reproduction of a moving image of the program A as the processing being executed. Meanwhile, in cases where the file acquisition unit acquires a still image file X in jpg. format, the acquisition unit for file attribute information acquires the file attribute information of the still image file as the file information. Here, according to the determination table for processing being executed, the determination unit determines that the activation of the function of reproducing a still image and the reproduction of the received file X correspond to the processing to be executed by the program A. Thus, even if the function being executed is not a function matching the received file, it is possible to execute an appropriate processing by means of the table as shown in Fig. 3.

Moreover, in cases where an image edit program B is running, a processing is determined according to whether edition of the still image file or edition of the moving image file is being executed, or is determined according to type of the acquired file. Additionally, in cases where the identification information of processing being executed, indicating that the recording/reproducing function of the recording/reproducing program C is being executed, is acquired, and in cases where the file attribute information of the still image file irrelevant to the recording/reproducing function, it is possible to determine that the program A and the still image reproducing function of the program A are activated and the received file is reproduced.

Additionally, not indicated in the table of Fig. 3, in cases where the still image file is received during the recording/reproducing function, the still image file is processed as a background image of the image being reproduced, or is processed as a wallpaper of the display. Therefore, the processing is not limited to a specific processing. Moreover, the table as shown in Fig. 3 may be preset, or may be set by a user.

According to the above configuration, it is possible for a user to view or edit the file X only by transmitting the file X to the electronic apparatus. Moreover, as to the processing to be executed based on the identification information of processing being executed and the file attribute information, a plurality of processings may be determined as candidates, and the final determination as to execution thereof may be made by a user. In this case, although one step of operation by the user increases, the processing desired by the user can be executed by simple operation.

In cases where the processing being executed is only a processing by an OS program to await input, an activation of a program for utilizing a file identified by the identification information of file attribute may be determined. For example, in cases where only the OS program runs, the identification information of processing being executed, which identifies the processing by the OS program to await input, is acquired, and in cases where the identification information of file attribute of a still image file is acquired, the determination unit may determine activation processing of the image reproducing program for viewing the acquired still image file.

The 'GUIP determination means' (0206) determines a processing to be executed only by a program executing GUI processing among the programs identified by the identification information of processing being executed. The 'GUI processing' is a processing to output a signal for GUI being executed displayed on a screen etc., which is connected to the electronic apparatus as an external device or is installed in the electronic apparatus. For example, in cases where a plurality of programs are simultaneously running, a processing by the program being executed, whose GUI is being displayed on a screen as shown in Fig. 1, is cited, or in cases where GUIs of a plurality of programs are being displayed in an overlapping manner, a processing by the program, whose GUI is active, is cited.

The GUIP determination means selects a program executing GUI processing according to display status of the screen or output signal outputted to the screen, and determines a processing to be executed only by the above program. For example, in the electronic apparatus as shown in Fig. 1, in cases where reproduction of the still image file by a dedicated program for reproduction is displayed on the screen, and editing of the still image file by a dedicated program for editing, which is not being displayed on the screen, is simultaneously executed, the acquisition unit for identification information of processing being executed acquires the identification information of reproduction by the dedicated program for reproduction and the identification information of editing by the dedicated program for editing as the identification information of processing being executed. In this case, in cases where the file acquisition unit acquires the still image file, the GUIP determination means determines a processing to be executed by the dedicated program for reproduction executing the GUI on the screen from the dedicated program for reproduction and the dedicated program for editing. Therefore, in the above case, the execution of reproducing the file acquired by the dedicated program for reproduction is selected.

Even if a plurality of programs such as system program are executed in the background, the GUIP determination means can determine the processing to be executed of the program executing the GUI, which most possibly executes the acquired file. Moreover, the processing to be executed by the program executing the GUI is selected, so that the user can visually check which program executes the processing, thereby improving user-friendliness.

### <Hardware Configuration of First Embodiment>

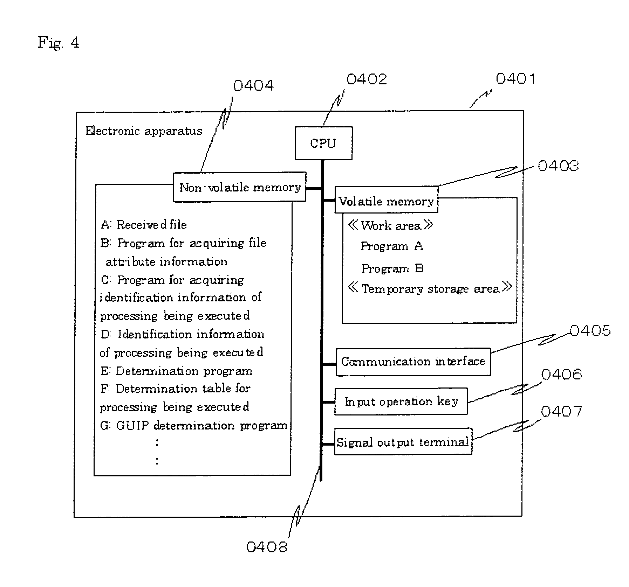

Fig. 4 is a diagram showing a hardware configuration for implementing the electronic apparatus of the first embodiment. An electronic apparatus of the first embodiment (0401) mainly comprises a CUP (0402), a volatile memory (0403) such as a RAM, a non-volatile memory (0404) such as a HDD, a communication interface (0405), an input operation key (0406), a signal output terminal (0407), and a system bus (0408).

The communication unit (0201) of the electronic apparatus of the first embodiment includes the communication interface (0405) etc., the file acquisition unit (0202) includes the non-volatile memory (0404) etc., the acquisition unit for file attribute information (0203), the acquisition unit for identification information of processing being executed (0204), and the determination unit (0205) include the CPU (0402), the volatile memory (0403), the non-volatile memory (0404), and program etc. store in the non-volatile memory.

### <Concrete Example of First Embodiment>

Hereinafter, a description of concrete operations of the electronic apparatus of the above hardware configuration will be provided. In the electronic apparatus of the first embodiment, at the outset, the file is received via the communication interface. In the communication interface, detection of a file, which is not allowed to be received, or a file, which is allowed to be received, is carried out, thereby receiving only the file, which is not allowed to be received. In cases where the communication interface receives the file, the received file is stored at a predetermined address A of the non-volatile memory. The CPU monitors the predetermined address A in the non-volatile memory, and in cases where detecting that the file is stored at the address, the CPU develops a program for acquiring file attribute information stored at a predetermined address B in the non-volatile memory on work area in the volatile memory, and activates the program. The program for acquiring file attribute information acquires the file attribute information from file extension, header information, and property information etc. of the received file, and stores them in the temporary storage area in the volatile memory.

The CPU develops the program for acquiring identification information of processing being executed, which has been stored at the predetermined address C in the non-volatile memory, on the work area in the volatile memory, thereby activating the program. The program for acquiring identification information of processing being executed identifies a processing being executed by a program developed on the work area in the volatile memory other than the program for acquiring the file attribute information and the program for acquiring the identification information of processing being executed. For example, in Fig. 4, the program A for reproducing an image file and the program B for editing an image file other than the above programs are developed on the work area in the volatile memory. Therefore, the program for acquiring identification information of processing being executed acquires identification information of processings being executed by these programs as the identification information of processing being executed, and stores them at a predetermined address D in the non-volatile memory. Note that the acquisition unit for identification information of processing being executed may constantly monitor the processing being executed, and may continuously carry out update of the identification information of processing being executed at every predetermined time or in real-time.

In cases where the file attribute information is stored in the temporary storage area in the volatile memory, the CPU develops the determination program, which has been stored at the predetermined address E in the non-volatile memory, on the work area in the volatile memory, thereby activating the program. The determination program acquires the file attribute information stored in the temporary storage area in the volatile memory, and the identification information of processing being executed stored at the predetermined address D in the non-volatile memory. Subsequently, a processing matching the file attribute information and the identification information of processing being executed, which have been acquired with reference to the determination table for processing being executed stored at a predetermined address F in the non-volatile memory as shown in Fig. 3, is determined. In cases where only one identification information of processing being executed has been acquired, the determination program can determine a processing to be executed by the program executing the processing identified by the identification information of processing being executed with reference to Fig.3.

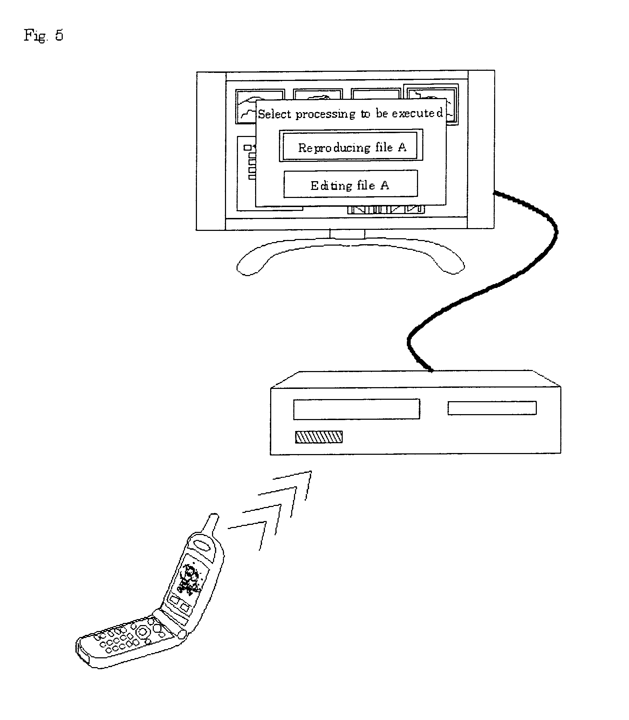

In addition, description of the case where a plurality of identification information of processing being executed are acquired as the identification information of processing being executed is provided. As described above, it is assumed that the identification information of the reproduction of still image by the program A for reproducing an image file and the identification information of the editing of moving image by the program B for editing an image file have been acquired as the identification information of processing being executed, and identification information of still image file has been acquired as the file attribute information. In this case, according to the determination table for processing being executed as show in Fig. 3, a processing to be executed by the program A for reproducing an image file is the reproduction of the acquired still image file, and a processing to be executed by the program B for editing an image file is the editing of the acquired still image file. In cases where priority order etc. is given to the determination table for processing being executed so as to execute a processing having high-priority, the processing to be executed by a program is determined with reference to the order. Moreover, the determination program may determine two processings as the processing to be executed, and may display the dialog box as shown in Fig. 5, so that the user may select any one of the processings to be executed, or both processings may executed by means of a multi-window.

In addition, description of the case where the electronic apparatus comprises the GUIP determination means is provided. In cases where the file attribute information and a plurality of identification information of processing being executed are acquired, the CPU detects the acquisition, and develops the GUIP determination program, which has been stored at the predetermined address G in the non-volatile memory, on the work area in the volatile memory, thereby activating the program. The GUIP determination program monitors the program executing GUI among programs, which have been developed on the work area in the volatile memory and are running. For example, as described above, in cases where the program A for reproducing an image file and the program B for editing an image file are executed, the program A for reproducing an image file is executed in the foreground, and the program B for editing an image file is executed in the background, the GUIP determination program selects the program A for reproducing an image file executed in the foreground, thereby determining a processing to be executed by the program. Therefore, the GUIP determination program determines the reproduction of the still image file, which has been acquired as a processing to be executed by the program for reproducing the image file.

In cases where the determination program or GUIP determination program determines the processing to be executed, an executive instruction of the processing is outputted to the running program. The program receiving the executive instruction executes the processing in accordance with the executive instruction. For example, in cases where program for reproducing an image file receives an instruction for reproducing the still image file as the processing to be executed, the program for reproducing an image file executes the reproduction of the acquired still image file

### <Processing Flow of First Embodiment>

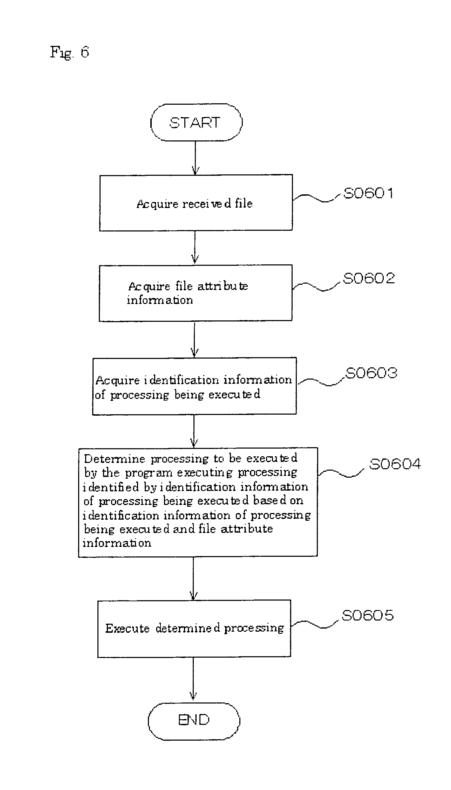

Hereinafter, a processing flow of the electronic apparatus of the first embodiment is described with reference to Fig. 6. The electronic apparatus of the first embodiment acquires the received file (S0601, step of acquiring a file). In cases where receiving the file, file attribute information is acquired from the acquired file (S0602, step of acquiring file attribute information). Subsequently, the identification information of processing being executed, which is for identifying a processing currently being executed, is acquired (S0603, step of acquiring identification information of processing being executed). The step of acquiring identification information of processing being executed may be executed ahead of the step of acquiring a file and the step of acquiring file attribute information. Subsequently, based on the identification information of processing being executed and the acquired file attribute information, a processing to be executed by the program executing the processing identified by the identification information of processing being executed is determined (S0604, step of determining). Note that, in the step of determining, a step of GUIP determining, which determines a processing to be executed only by a program executing GUI processing among the programs identified by the identification information of processing being executed, may be provided. In cases where the processing to be executed is determined, the running program executes the determined processing (S0605, step of executing).

### <Brief Description of Effects of First Embodiment>

The electronic apparatus of the first embodiment having the above-mentioned configuration can execute a processing depending on the file attribute of the received file and the processing of the running program. Therefore, the electronic apparatus of the first embodiment can automatically carry out an operation according not only to file type but also to a processing by the program executed by the electronic apparatus, thereby executing a processing desired by a user without complicated operation by the user. Accordingly, it is possible to improve user-friendliness.

### <<Second embodiment>>

### <Concept of Second Embodiment>

Hereinafter, a second embodiment of the present invention will be described. In the second embodiment, an electronic apparatus, which executes processing of reproducing a still image file in cases where the still image file is received via the communication unit, and executes processing of reproducing a moving image file in cases where the moving image file is received. Therefore, in the electronic apparatus of the second embodiment, a program, which can automatically execute processing depending on file attribute of the received file, is executed, and the file attribute is outputted to the program.

### <Specifying of Components of Second Embodiment>

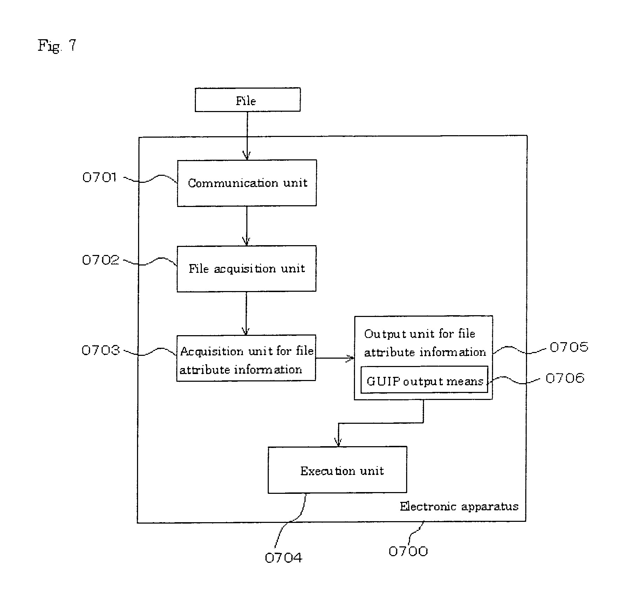

Fig. 7 is a functional block diagram of the electronic apparatus of the second embodiment. An 'electronic apparatus' (0700) of the second embodiment basically comprises a 'communication unit' (0701), a 'file acquisition unit' (0702), an 'acquisition unit for file attribute information' (0703), an 'execution unit' (0704), and an 'output unit for file attribute information' (0705). Moreover, the output unit for file attribute information may comprise 'GUIP determination means' (0706). Note that the above electronic apparatus, the communication unit, the file acquisition unit, and the acquisition unit for file attribute information are the same as those of the first embodiment, so that descriptions are omitted.

### <Description of Components of Second Embodiment>

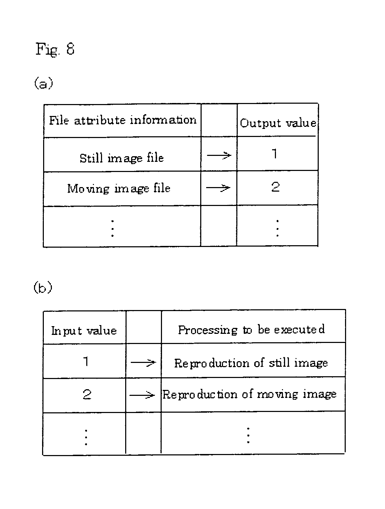

The 'execution unit' (0704) is configured to execute a file attribute-dependent program including a step of causing a computer to execute an operation to determine a processing to be executed according to the file attribute information. The 'file attribute-dependent program' is a program including the step of causing a computer to execute an operation to determine a processing to be executed according to the file attribute information. The terms 'operation to determine a processing to be executed according to the file attribute information' is an operation to determine which processing is to be executed according to the acquired file attribute information when the file attribute information is acquired. More specifically, in the operation, in cases where specific file attribute information is inputted, information for determining a processing to be executed in accordance with the file attribute information is outputted. For example, as shown in Fig. 8(a), by the operation, the file attribute information is converted to numerical values in accordance with the file attribute and is outputted, thereby determining the processing to be executed in accordance with the converted numerical value. In Fig. 8(a), in cases where information indicating the still image file as the file attribute information is inputted, '1' is outputted as an output value. The output value '1' is an instruction to execute the reproduction of the still image, and as shown in Fig. 8(b), the processing to be executed is determined corresponding to the output value '1'. Here, the 'reproduction of still image' is determined for the input value '1'. Thus, the file attribute-dependent program includes the step of causing a computer including CPU etc. to execute the operation to determine the processing to be executed according to the file attribute information. Note that the operation can be executed by various methods, and is not limited to the above example.

Note that the file attribute-dependent program may be a basic program such as an OS (Operating system). In cases where the file attribute-dependent program is an OS program, it is possible to determine the activation of the program to utilize the acquired file as the processing to be executed in accordance with the file attribute information. For example, in cases where only the OS program is executed as the file attribute information by the execution unit, when the file acquisition unit acquires a still image file, and the acquisition unit for file attribute information acquires the file attribute information of the file, the OS program as the file attribute-dependent program causes a computer to execute an operation to activate the program for reproducing image for viewing the acquired still image file as the processing to be executed by the OS program.

The 'output unit for file attribute information' (0705) is configured to output the acquired file attribute information to the execution unit, such that the file attribute-dependent program can carry out the operation, in cases where the execution unit executes the file attribute-dependent program. When the acquisition unit for file attribute information acquires the file attribute information, the output unit for file attribute information selects an output destination of the file attribute information. In cases where one file attribute-dependent program is executed by the execution unit, the file attribute information is outputted to the executed file attribute program. In cases where a plurality of file attribute-dependent programs are executed in an overlapping manner, although the file attribute information may be outputted to the plurality of file attribute-dependent programs, in order to prevent overlapping processing, it is preferable to selectively output the file attribute information to any one of the file attribute-dependent programs. Additionally, the file attribute information may be outputted to a program having high-priority in accordance with a predetermined priority order of each file attribute-dependent program. For example, in cases where the OS program as the file attribute-dependent program and the other file attribute-dependent program are running simultaneously, the file attribute information may be outputted to the file attribute-dependent program other than the OS program, and in cases where only the OS program is running, the file attribute information may be outputted to the OS program.

The output unit for file attribute information may output the file attribute information as it is, or may output the file attribute information after converting the information to a format readable for the file attribute-dependent program, so that the file attribute-dependent program can execute the operation.

The 'GUIP output means' (0706) is included in the output unit for file attribute information, and carries out the output only to the file attribute-dependent program including GUI being executed by the execution unit. The terms 'GUI being executed by the execution unit' corresponds to a state where GUI is being displayed on a screen etc., which is connected to the electronic apparatus as an external device or is installed in the electronic apparatus. Even if a plurality of the file attribute-dependent programs are running in overlapping manner, the output only to the file attribute-dependent program, whose GUI is being displayed on a screen, is carried out through the GUIP determination means. According to the GUIP determination means, even if a plurality of programs such as system program as the file attribute-dependent program are executed in the background, it is possible to carry out the output only to the file attribute-dependent program executing the GUI, which most possibly executes the acquired file. Moreover, the processing to be executed by the file attribute-dependent program, whose GUI is being displayed, is selected, so that the user can visually check which program executes the processing, thereby improving user-friendliness.

In cases where the plurality of the file attribute-dependent program are executed by the execution unit, the GUIP determination means detects display status of each program developed on the work area in the volatile memory and an active program, thereby selecting the file attribute-dependent program, whose GUI is being executed by the execution unit, and determining an output destination of the file attribute information. For example, it is assumed that reproduction of the still image file by a dedicated program for reproduction as the file attribute-dependent program is displayed on the screen, and, not displayed on the screen, editing of the still image file by a dedicated program for editing is simultaneously running. In this case, the GUIP determination means determines the dedicated program for reproduction executing GUI display on the screen as an output destination from the dedicated program for reproduction and the dedicated program for editing, thereby outputting the file attribute information only to the dedicated program for reproduction.

### <Hardware Configuration of Second Embodiment>

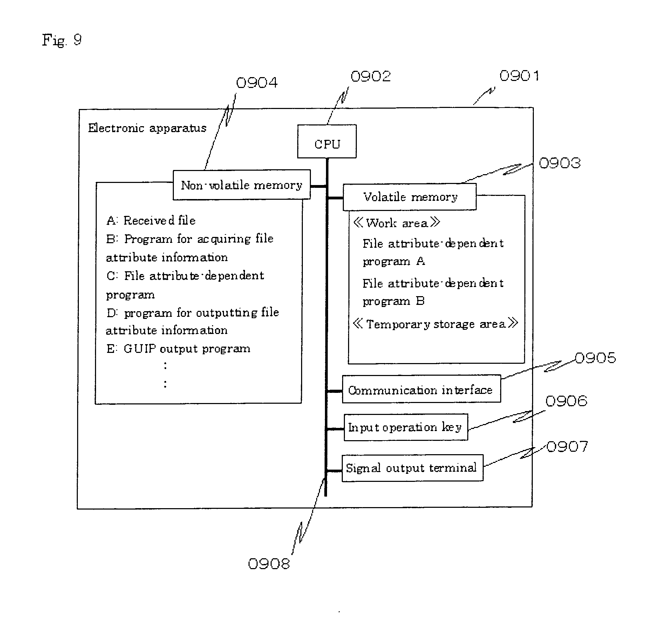

Fig. 9 is a diagram showing a hardware configuration for implementing the electronic apparatus of the second embodiment. An electronic apparatus of the second embodiment (0901) mainly comprises a CUP (0902), a volatile memory (0903) such as a RAM, a non-volatile memory (0904) such as a HDD, a communication interface (0905), an input operation key (0906), a signal output terminal (0907), and a system bus (0908).

The communication unit (0701) of the electronic apparatus of the second embodiment includes the communication interface (0905) etc., the file acquisition unit (0702) includes the non-volatile memory (0904) etc., the acquisition unit for file attribute information (0703), the acquisition unit for identification information of processing being executed (0704), and the determination unit (0705) include the CPU (0902), the volatile memory (0903), the non-volatile memory (0904), and program etc. stored in the non-volatile memory.

### <Concrete Example of Second Embodiment>

Hereinafter, a description of operation of the electronic apparatus having the above hardware configuration is provided. When the file is received via the communication interface, the electronic apparatus stores the received file at a predetermined address A in the non-volatile memory. The CPU monitors the predetermined address A in the non-volatile memory, and in cases where detecting that the file is stored at the address, the CPU develops a program for acquiring file attribute information stored at a predetermined address B in the non-volatile memory on work area in the volatile memory, and activates the program. The program for acquiring file attribute information acquires the file attribute information from file extension, header information, and property information etc. of the received file, and stores them in the temporary storage area in the volatile memory.

The CPU detects the work area in the volatile memory, and determines whether the file attribute-dependent program is running. The file attribute-dependent program is stored at the predetermined address C in the non-volatile memory, and the CPU detects whether the file attribute-dependent program has been developed on the work area in the volatile memory and has been activated. In cases where the file attribute-dependent program is running, the CPU develops the program for outputting file attribute information stored in the predetermined address D in the non-volatile memory on the work area in the volatile memory, and activates the program. The program for outputting file attribute information outputs the file attribute information to the file attribute-dependent program. Here, the output unit for file attribute information may output the file attribute information after converting the file attribute information to a format readable by the file attribute-dependent program, so that the file attribute-dependent program can execute the operation.

When the file attribute information is outputted to the running file attribute-dependent program, the file attribute-dependent program causes the CPU to execute an operation to determine the processing to be executed according to the file attribute information, thereby executing the processing determined as a result of the operation. Here, it is configured that the processing by the file attribute-dependent program is determined depending on the type of the received file. For example, in cases where the file attribute-dependent program is a program for reproducing still image and moving image, when the still image file is received, the reproduction of the still image is executed, and when the moving image file is received, the reproduction of the moving image is executed.

Subsequently, the case where a plurality of the file attribute-dependent programs are executed is described. For example, in cases where the file attribute-dependent program A for reproducing image and the file attribute-dependent program B for editing image are developed on the work area in the volatile memory, the program for outputting file attribute information may output the file attribute information to both file attribute-dependent programs. Additionally, in cases where priority etc. is determined so as to output the file attribute information to a file attribute-dependent program having priority, the file attribute information is outputted with reference to the priority.

In addition, description of the case where the electronic apparatus comprises the GUIP output means is provided. In cases where the file attribute information and a plurality of file attribute-dependent programs are acquired, the CPU carries out detection, and develops the GUIP output program, which has been stored at the predetermined address E in the non-volatile memory, on the work area in the volatile memory, thereby activating the program. The GUIP output program monitors the program executing GUI among the file attribute-dependent programs, which have been developed on the work area in the volatile memory and are running. For example, as shown in Fig. 9, in cases where the program A for reproducing an image file and the program B for editing an image file are developed on the work area in the volatile memory, and are executed, the program A for reproducing an image file is executed in the foreground, and the program B for editing an image file is executed in the background, the GUIP output program selects the program A for reproducing an image file executed in the foreground, thereby outputting the file attribute information only to the program. Therefore, in this case, the GUIP output program outputs the file attribute information only to the program for reproducing the image file.

The file attribute-dependent program, which has received the file attribute information, causes the CPU to execute an operation to determine the processing to be executed according to the file attribute information, thereby executing the processing determined as a result of the operation. For example, in cases where the above-mentioned program for reproducing the image file has received the file attribute information of the still image file, and the processing for reproducing the still image file has been determined by the operation, the program for reproducing the image file immediately executes the reproduction of the still image file.

### <Processing Flow in Second Embodiment>

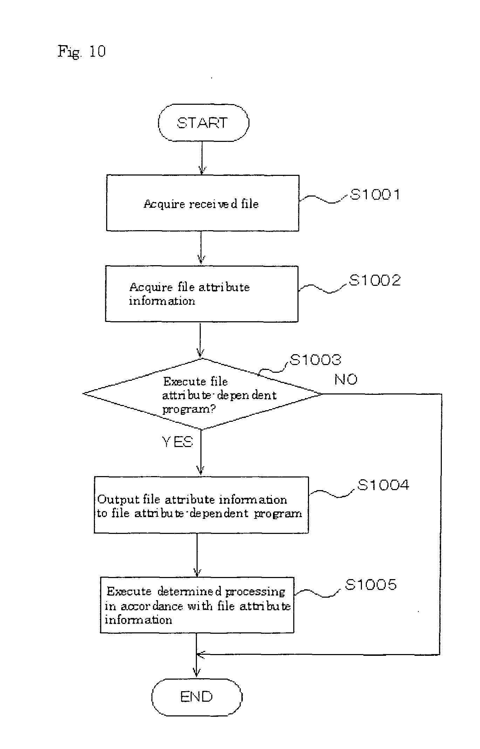

Hereinafter, a processing flow of the electronic apparatus of the second embodiment is described with reference to Fig. 10. The electronic apparatus of the second embodiment acquires the received file (S1001, step of acquiring a file). In cases where receiving the file, file attribute information is acquired from the acquired file (S1002, step of acquiring file attribute information).

Subsequently, it is determined whether the file attribute-dependent program, which causes the CPU to execute an operation to determine the processing to be executed according to the file attribute information, is executed (S1003, step of determining). In cases where the file attribute-dependent program is executed, the received file attribute information is outputted, so that the file attribute-dependent program can execute the operation (S1004, step of outputting file attribute information). Note that, in cases where the GUIP output means etc. is provided, a step of GUIP outputting, which is for carrying out the output only to the file attribute-dependent program, whose GUI is executed by the execution unit, may be provided. When the file attribute information is outputted, the running file attribute-dependent program executes the predetermined processing (S1005, step of executing).

### <Brief Description of Effects of Second Embodiment>

In the electronic apparatus of the second embodiment having the above configuration, the operation to determine the processing to be executed by the file attribute-dependent program according to the file attribute information is carried out, thereby executing the processing depending on the file attribute information of the received file and the running program. Therefore, it is possible to automatically carry out the operation according to the type of the received file and the program being executed by the electronic apparatus, thereby executing a processing desired by a user without complicated operation by the user. Accordingly, it is possible to improve user-friendliness. Moreover, it is not necessary to store processings corresponding to all programs in the electronic apparatus, thereby enabling upgrade etc. of the program flexibly.

### <<Example>>

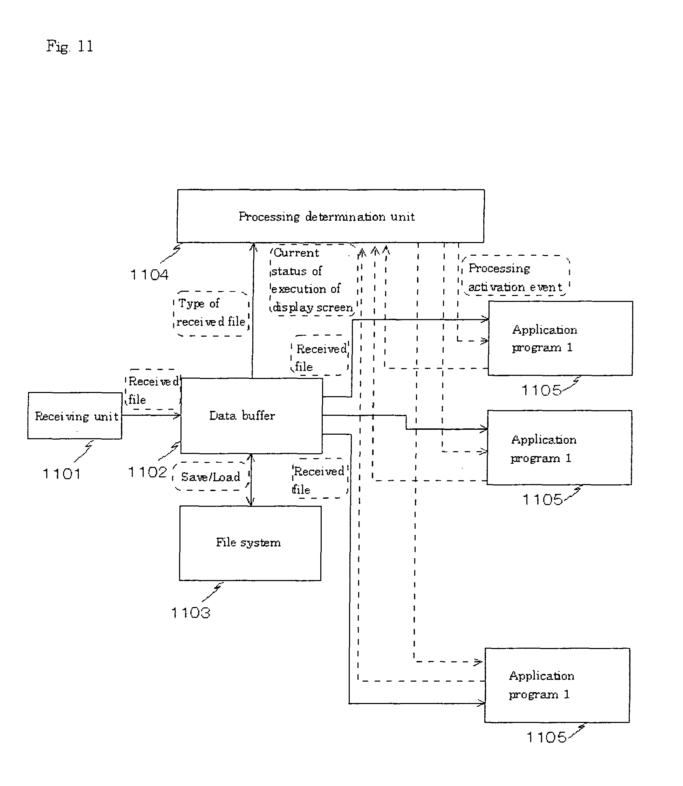

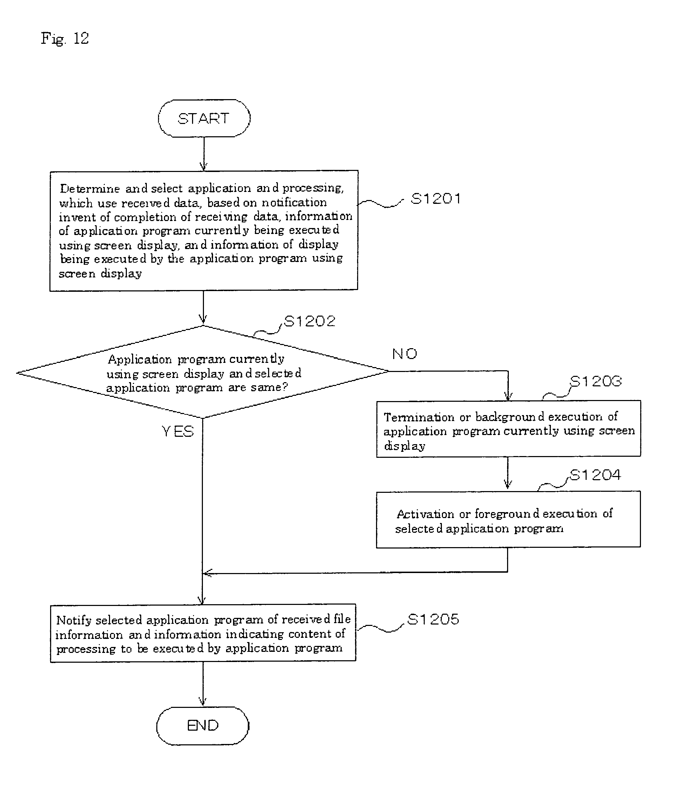

Hereinafter, examples of the present invention will be described with reference to Figs. 11 and 12. Fig. 11 is a diagram showing a configuration of the electronic apparatus of the present invention. As shown in Fig. 11, the electronic apparatus of the present invention comprises a reception unit (1101) for receiving a file, a data buffer (1101) for notifying a processing determination unit of a type of the received file, a file system (1103) for storing the received file etc. in a readable state, the processing determination unit (1104) for determining and selecting a processing in each application according to the type of the received file, and a plurality of application programs (1105) executed by the CPU etc.
Fig. 12 is a flowchart of the processing determination unit. The processing determination unit determines and selects application and processing, which use received data, based on notification invent of completion of receiving data, information of application program currently being executed using screen display, and information of display being executed by the application program using screen display (S1201). The completion of the reception of the file, a notification event, is outputted from the data buffer, and the information of current status of the execution of screen display is outputted from the respective application programs. After the selection, it is determined whether the application program currently using screen display and the selected application program are the same (S1202). In cases where they are not the same, termination or background execution of application program currently using screen display is carried out (S1203). When the background execution is completed, activation or foreground execution of selected application program is carried out (S1204). Subsequently, the received file information and information indicating content of processing to be executed by the selected application program are notified to the selected application program (S1205).

According to the above configuration, it is possible to determine the status of the screen display displayed by the electronic apparatus and the type of the received file, thereby automatically determining an action. Therefore it is possible to provide a user with the electronic apparatus, wherein the user can use the file only by transmitting the file without complicated operations of the electronic apparatus.

### BRIEF DESCRIPTION OF THE DRAWINGS

Fig. 1 is a conceptual diagram of a first embodiment.
Fig. 2 is a functional block diagram of the first embodiment.
Fig. 3 is a diagram showing correspondence between identification information of processing being executed and file attribute information.
Fig. 4 is a diagram showing a hardware configuration of the first embodiment.
Fig. 5 is a diagram showing a screen for user's selection.
Fig. 6 is a flowchart of the first embodiment.
Fig. 7 is a functional block diagram of a second embodiment.
Fig. 8 is a diagram showing an operation according to the file attribute information
Fig. 9 is a diagram showing a hardware configuration of the second embodiment.
Fig. 10 is a flowchart of the first embodiment.
Fig. 11 is a diagram showing a configuration of the present invention.
Fig. 12 is a flowchart of a processing determination unit.

### Description of Reference Numerals

0100, 0200 Electronic apparatus
0201 Communication unit
0202 File acquisition unit
0203 Acquisition unit for file attribute information
0204 Acquisition unit for identification information of processing being executed
0205 Determination unit
0206 GUIP determination means
0704 Execution unit
0705 Output unit for file attribute information
0706 GUIP output means

## Claims

1. An electronic apparatus, comprising:
a communication unit;
a file acquisition unit, which acquires a file in cases where the communication unit has received the file;
an acquisition unit for file attribute information, which acquires file attribute information from the acquired file;
an acquisition unit for identification information of processing being executed, which acquires identification information of a processing currently being executed; and
a determination unit, which determines a processing to be executed by a program executing the processing identified by the identification information of processing being executed based on the identification information of processing being executed and on the acquired file attribute information.

2. The electronic apparatus according to Claim 1,
wherein the determination unit comprises
GUIP determination means, which determines a processing to be executed only by a program executing GUI processing among the programs identified by the identification information of processing being executed.

3. An electronic apparatus, comprising:
a communication unit;
a file acquisition unit, which acquires a file in cases where the communication unit has received the file;
an acquisition unit for file attribute information, which acquires file attribute information from the acquired file;
an execution unit, which executes a file attribute-dependent program including a step of causing a computer to execute an operation to determine a processing to be executed according to the file attribute information; and
an output unit for file attribute information, which outputs the acquired file attribute information to the execution unit, such that the file attribute-dependent program can carry out said operation, in cases where the execution unit executes the file attribute-dependent program.

4. The electronic apparatus according to Claim 3,
wherein the output unit for file attribute information comprises
GUIP output means, which carries out said output only to the file attribute-dependent program including GUI being executed by the execution unit.

5. A control method for electronic apparatus, comprising the steps of:
acquiring a file, which has been received;
acquiring file attribute information from the acquired file;
acquiring identification information of processing being executed, which is for identifying a processing currently being executed; and
determining a processing to be executed by a program executing the processing identified by the identification information of processing being executed based on the identification information of processing being executed and on the acquired file attribute information.

6. A control method for electronic apparatus, comprising the steps of:
acquiring a file, which has been received;
acquiring file attribute information from the acquired file;
determining whether a file attribute-dependent program including a step of causing a computer to execute an operation to determine a processing to be executed according to the file attribute information is executed; and
outputting the acquired file attribute information, such that the file attribute-dependent program can carry out said operation, in cases where the file attribute-dependent program is executed.
